# EUROPÄISCHE PATENTSCHRIFT

(11) **EP 0 647 891 B1**
(45) Veröffentlichungstag und Bekanntmachung des Hinweises auf die Patenterteilung: **29.04.1998**
(21) Anmeldenummer: 94112149.3
(22) Anmeldetag: 11.10.1993
(51) Int. Cl.: G05B 19/05

(54) **Verarbeitungsmodul für ein modulares Automatisierungssystem**
Processing module for a modular automation system
Unité d'entrée pour un système d'automatisation modulaire

(43) Veröffentlichungstag der Anmeldung: 12.04.1995
(62) Teilanmeldung aus: 93116453.7
(73) Patentinhaber: SIEMENS AKTIENGESELLSCHAFT, 80333 München (DE)
(72) Erfinder: Barthel, Herbert, Dipl.-Ing., D-91074 Herzogenaurach (DE); Schütz, Hartmut, Dipl.-Ing., D-91336 Heroldsbach (DE); Daar, Horst, Dr., D-91058 Erlangen (DE)

(56) Entgegenhaltungen:
- EP-A- 0 109 734
- EP-A- 0 130 269
- EP-A- 0 298 396
- EP-A- 0 496 097
- US-A- 4 365 312
- US-A- 4 442 504
- US-A- 4 870 564
- SIEMENS ENERGY & AUTOMATION, vol.12, no.3, BERLIN DE pages 6 - 7 RICHARD FISCHER 'FAULT TOLERANT PLC'S ELIMINATE PRODUCTION STANDSTILL'
- ENGINEERING AND AUTOMATION, vol.13, no.4, BERLIN DE pages 8 - 12 H. KIESEWALTER & A. POLANSKY 'RECHNERGESTEUERTE ROLLFÜHRUNGSSYSTEME VERBESSERN KAPAZITÄTSAUSLASTUNG AUF FLUGHÄFEN'
- ELEKTRONIK, vol.33, no.6, March 1984, MUNCHEN DE page 128 'uP PASST AUF SPS AUF'
- AUTOMATISIERUNGSTECHNISCHE PRAXIS - ATP, vol.33, no.5, May 1991, MUNCHEN DE pages 234 - 239 M. HOFFMAN 'SPEICHERPROGRAMMIERBARE STEUERUNGEN FÜR DIE PROZESSLEITTECHNIK: BEDEUTUNG, STATUS, ANFORDERUNGEN, TRENDS'

## Beschreibung

Die vorliegende Erfindung betrifft ein Verarbeitungsmodul für ein modulares Automatisierungssystem, z. B. eine modulare speicherprogrammierbare Steuerung, wobei das Automatisierungssystem aus einer Zentraleinheit und der Zentraleinheit untergeordneten Peripherieeinheiten, z. B. Ein-/Ausgabebaugruppen, besteht, wobei die Peripherieeinheiten über einen Gerätebus miteinander koppelbar sind, wobei das Verarbeitungsmodul einen Prozessor, einen Speicher, ein sperrbares Buskoppelelement und ein sperrbares Zentralkoppelelement aufweist, wobei der Prozessor, der Speicher und die Koppelelemente über einen verarbeitungsmodulinternen Modulbus miteinander verbunden sind und das Buskoppelelement an den Gerätebus und das Zentraleinheitkoppelelement an die Zentraleinheit ankoppelbar ist.

Das von der SIEMENS AG angebotene Automatisierungsgerät S5-115 U ist ein modulanes Automatisierungssystem, dessen konstruktive Details beispielsweise aus der DE 34 18 844 C2 bekannt sind. Bei diesem Automatisierungssystem nimmt die Zentraleinheit außer der Abarbeitung des Anwenderprogramms noch eine Vielzahl anderer Aufgaben wahr, z. B. den Test und die Überwachung der mit der Zentraleinheit verbundenen Peripherieeinheiten. Dadurch steht die Zentraleinheit nicht ausschließlich zur Abarbeitung des Anwenderprogramms zur Verfügung. Bei redundanten Automatisierungssystemen erfolgt auch die Synchronisation und der Datenabgleich über die Zentraleinheit. Die Leistungsfähigkeit des Automatisierungssystems wird dadurch negativ beeinflußt.

Aus der US-A 4 442 504 ist ein modulares Automatisierungssystem bekannt, bei dem zwischen der Zentraleinheit und den Peripheriebaugruppen eine Schnittstelleneinheit angeordnet ist. Sie dient u. a. der Überwachung und dem Test der Peripheriebaugruppen.

Die Aufgabe der vorliegenden Erfindung besteht darin, eine Möglichkeit zu schaffen, die Zentraleinheit von Kommunikationsaufgaben zu entlasten. Insbesondere soll bei redundanten Automatisierungssystemen die Zentraleinheit von allen Aufgaben, die zur Synchronisation und zum Datenabgleich erforderlich sind, entlastet werden.

Die Aufgabe wird durch ein Verarbeitungsmodul gelost, das mindestens eine mit dem Prozessor verbundene Kommunikationsschnittstelle aufweist. An die Kommunikationsschnittstelle ist z. B. die Ankopplung einer Bedien- und Beobachtungseinheit möglich. Ebenso ist es möglich, daß zwei oder mehr modulare Automatisierungssysteme, die je ein erfindungsgemäßes Verarbeitungsmodul aufweisen, über die Kommunikationsschnittstellen der Verarbeitungsmodule miteinander kommunizieren, sich also insbesondere synchronisieren und ihre Daten abgleichen.

Wenn das Verarbeitungsmodul eine mit dem Prozessor verbundene Programmierschnittstelle aufweist, kann das Verarbeitungsmodul völlig unabhängig von der Zentraleinheit programmiert werden.

Wenn das Verarbeitungsmodul eine Alarmschnittstelle aufweist, die mit einer Stromversorgungseinrichtung für die Prozeßstellglieder verbunden ist, ist im Fehlerfall ein zweiter Abschaltweg für die Prozeßstellglieder gegeben.

Weitere Vorteile und Einzelheiten ergeben sich aus der nachfolgenden Beschreibung eines Ausführungsbeispiels, anhand der Zeichnungen sowie in Verbindung mit den weiteren Ansprüchen. Dabei zeigen:
FIG 1 ein Verarbeitungsmodul,
FIG 2 ein modulares Automatisierungssystem und
FIG 3 ein redundantes Automatisierungssystem.

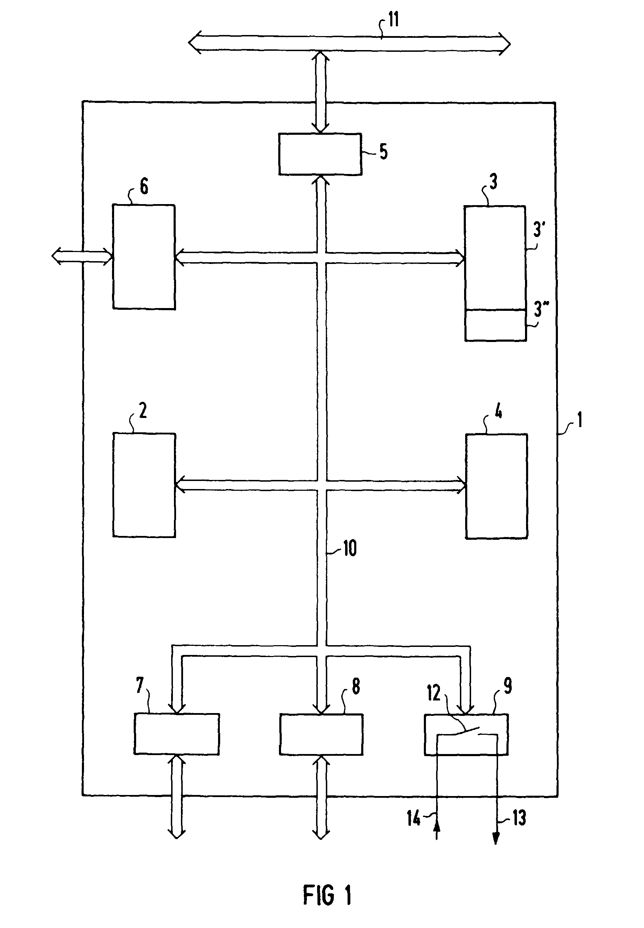

Gemäß FIG 1 besteht das Verarbeitungsmodul 1 im wesentlichen aus einem Prozessor 2, einem ROM-Speicher 3 und einem RAM-Speicher 4 sowie dem Buskoppelelement 5 und dem Zentraleinheitkoppelelement 6. Ferner weist das Verarbeitungsmodul 1 noch eine Programmierschnittstelle 7, eine Kommunikationsschnittstelle 8 und eine Alarmschnittstelle 9 auf. Die Elemente 2 bis 9 sind über den Modulbus 10 untereinander verbunden.

Die Koppelelemente 5, 6 sind beispielsweise sperrbare, bidirektionale Tristate-Treiber, über die das Verarbeitungsmodul 1 mit dem Geratebus 11 bzw. mit einer in FIG 1 nicht dargestellten Zentraleinheit verbindbar ist. Der Prozessor 2 ist typischerweise ein Standard-Mikroprozessor, z.B. ein Siemens 80C167.

Im ROM 3 ist im Speicherbereich 3' das Betriebssystem für den Prozessor 2 abgespeichert. Im RAM 4 ist das aktuell vom Prozessor 2 abzuarbeitende Programm abgespeichert. Ferner sind im RAM 4 über den Gerätebus 11 eingelesene Werte bzw. an den Gerätebus 11 auszugebende Werte, also das Prozeßabbild, abgespeichert. Ferner sind im RAM sonstige Daten abgespeichert.

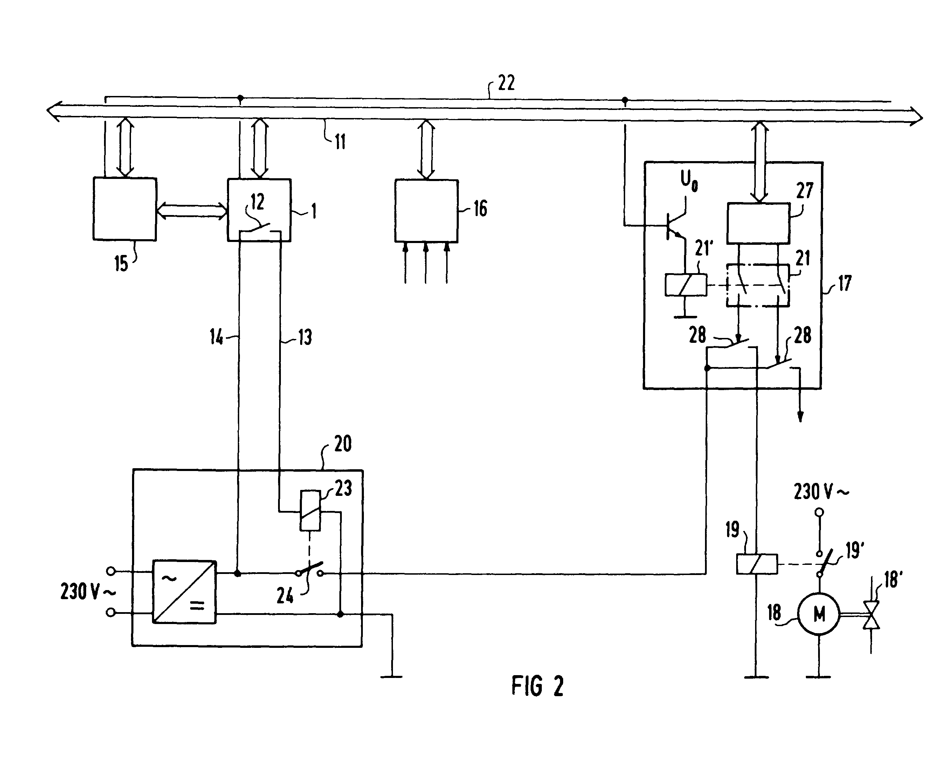

Über die Programmierschnittstelle 7 kann direkt ein neues Programm in das RAM 4 geladen werden, der Prozessor 2 also umprogrammiert werden. Es ist aber auch möglich, das Verarbeitungsmodul 1 über die Zentraleinheit und das Zentraleinheitkoppelelement 6 zu programmieren. Über die Kommunikationsschnittstelle 8 kommuniziert das Verarbeitungsmodul 1 mit anderen Geräten, beispielsweise mit dem Verarbeitungsmodul eines anderen modularen Automatisierungssystems. Die Alarmschnittstelle weist intern einen Schalter 12 auf, mittels dessen die Ausgabeleitung 13 mit der Eingabeleitung 14 verbunden werden bzw. die Ausgabeleitung 13 von der Eingabeleitung 14 getrennt werden kann. Über die Eingabeleitung 14 wird der Alarmschnittstelle 9 ein 24 Volt-Signal zugeführt. Auf die Bedeutung der Alarmschnittstelle 9 wird nachfolgend in Verbindung mit FIG 2 noch näher eingegangen werden.

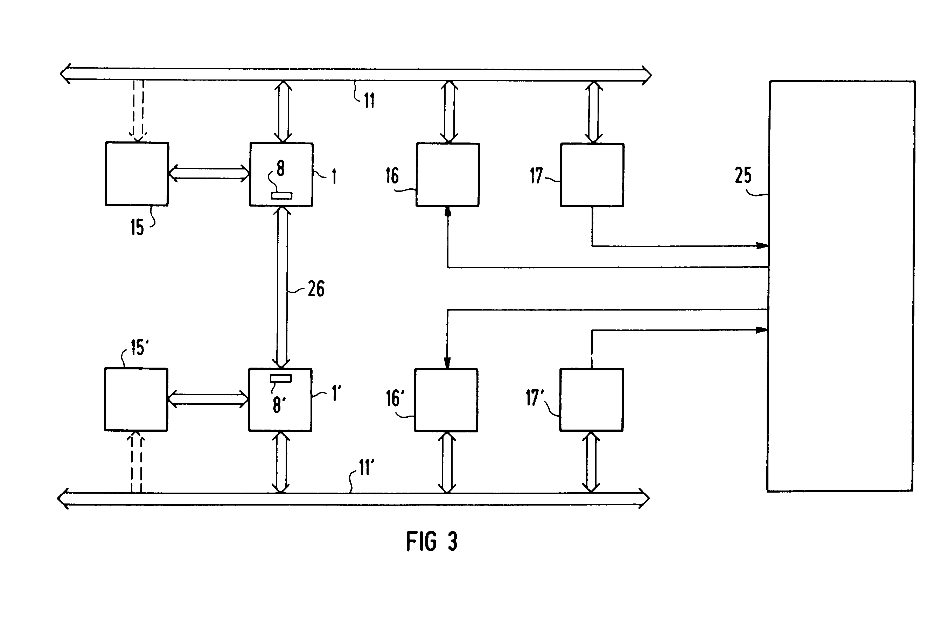

Gemäß FIG 3 besteht das redundante Automatisierungssystem aus mindestens zwei modularen Automatisierungssystemen, die jeweils aus einer Zentraleinheit 15, 15', einem Verarbeitungsmodul 1, 1', mindestens einer Eingabebaugruppe 16, 16' und mindestens einer Ausgabebaugruppe 17, 17' bestehen. Die Baugruppen 16, 16', 17, 17' sind dabei über die Geratebusse 11, 11' mit den Verarbeitungsmodulen 1, 1' verbunden. Die Zentraleinheiten 15, 15' sind mit den Verarbeitungsmodulen 1, 1' verbunden. Wie in FIG 1 mittels der gestrichelten Pfeile zu den Zentraleinheiten 15, 15' angedeutet, werden die Zentraleinheiten 15, 15' über die Gerätebusse 11, 11' zwar mit Energie versorgt, die Zentraleinheiten 15, 15' greifen aber nicht direkt auf die Gerätebusse 11, 11' zu. Statt dessen erfolgen alle Peripheriezugriffe indirekt über die Verarbeitungsmodule 1, 1'. Die Verarbeitungsmodule 1, 1' könnten in diesem Fall die Eingabesignale von den Eingabebaugruppen 16, 16' einlesen, diese Signale aufbereiten und die aufbereiteten Signale an die Zentraleinheiten 15, 15' weitergeben. Umgekehrt konnten auch Ausgabesignale zunächst von den Zentraleinheiten 15, 15' übernommen, sodann aufbereitet und dann an die Ausgabebaugruppen 17, 17' ausgegeben werden.

Die Automatisierungssysteme lesen über die Eingabebaugruppen 16, 16' Signale vom technischen Prozeß bzw. der technischen Anlage 25 ein. Ebenso geben die Ausgabebaugruppen 17, 17' Signale an den technischen Prozeß bzw. die technische Anlage 25 aus. Zwecks gemeinsamer Führung der technischen Anlage 25 durch die beiden Automatisierungssysteme sind die Verarbeitungsmodule 1, 1' über ihre Kommunikationsschnittstellen 8, 8' und das Kommunikationssystem 26, hier eine einfache Kommunikationsleitung, miteinander verbunden. Über die Verarbeitungsmodule 1, 1' erfolgt im vorliegenden Fall sowohl die Synchronisation als auch die Datenaufbereitung, also die Auswertung von mehreren Eingabesignalen aufgrund vorgegebener Projektierungsregeln etc. Auch die gesamte sonstige Kommunikation zwischen den modularen Automatisierungssystemen, z. B. das Aufdaten eines der Systeme durch das andere System, erfolgt über die Verarbeitungsmodule 1, 1'.

Die Aufbereitung kann z. B. darin bestehen, daß Eingabesignale von den Verarbeitungsmodulen 1, 1' mehrfach eingelesen werden und bei Signalverschiedenheit aufgrund vorgegebener Projektierungsregeln den Zentraleinheiten 15, 15' ein bestimmter Wert, z. B. das Mehrheitsergebnis von drei Signalgebern zur Verfügung gestellt wird. In analogerweise können selbstverständlich auch Ausgabesignale mehrfach an Ausgabebaugruppen ausgegeben werden.

Die Tätigkeit der Verarbeitungsmodule 1, 1' bleibt den Zentraleinheiten 15, 15' verborgen, d. h. die Zentraleinheiten 15, 15' merken z. B. nicht, daß die Verarbeitungsmodule 1, 1' einen Mehrheitswert als Eingabesignal zur Verfügung stellen. Den Zentraleinheiten 15, 15' wird lediglich dieses Eingabesignal übermittelt.

Das Ein- und Ausgeben sowie das Aufbereiten von Daten durch die Verarbeitungsmodule 1, 1' kann parallel zur Abarbeitung des Anwenderprogramms durch die Zentraleinheiten 15, 15' erfolgen. Datenübertragungen zwischen den Zentraleinheiten 15, 15' und den Verarbeitungsmodulen 1, 1' erfolgen auch erheblich schneller als Zugriffe auf die Gerätebusse 11, 11'. Im Ergebnis kann die Zykluszeit des Automatisierungssystems, d.h. die Zeit, die die Zentraleinheiten 15, 15' zum einmaligen Durchlaufen des Anwenderprogramms benötigen, und damit die Systemreaktionszeit erheblich verkürzt werden.

FIG 2 zeigt eines der Teilsysteme von FIG 3. Im vorliegenden Fall ist das modulare Automatisierungssystem als modulare speicherprogrammierbare Steuerung ausgebildet. Sie besteht aus der Zentraleinheit 15, dem Verarbeitungsmodul 1, mindestens einer Eingabebaugruppe 16 und mindestens einer Ausgabebaugruppe 17, die über den Gerätebus 11 miteinander verbunden sind.

Über die Eingabebaugruppe 16 sind der speicherprogrammierbaren Steuerung Eingangssignale von dem in FIG 2 nicht dargestellten technischen Prozeß bzw. der technischen Anlage zuführbar. Über die Ausgabebaugruppe 17 sind Ausgangssignale an Prozeßstellglieder wie beispielsweise den Motor 18 ausgebbar, der ein Ventil 18' steuert.

Zur Ausgabe der Ausgabesignale werden der Logikschaltung 27 der Ausgabebaugruppe 17 die auszugebenden Signale von der Zentraleinheit 15 vorgegeben. Die Logikschaltung 27 steuert daraufhin jeden Schalter 28 entsprechend dem im zugeordneten auszugebenden Signal an. Dadurch wird das Relais 19 erregt oder nicht und dementsprechend der Schalter 19' geschlossen oder nicht.

Alle Schalter 28 der Ausgabebaugruppe 17 werden über die Stromversorgungseinrichtung 20 mit Energie versorgt. Um im Anforderungsfall ein Abschalten aller Prozeßstellelemente zu gewährleisten, weist die Ausgabebaugruppe 17 eine Schaltergruppe 21 auf. Die Schalter dieser Schaltergruppe 21 werden durch Abfallen des Relais 21' geöffnet, wenn der Ausgabebaugruppe 17 von der Zentraleinheit 15 über die Steuerleitung 22 ein Sperrsignal übermittelt wird. Die Schaltergruppe 21 trennt dann alle Ausgänge der Ausgabebaugruppe 17 von der Logikschaltung 27.

Bei einer Fehlfunktion eines der Teilsysteme des redundanten Automatisierungssystems wird dies von den Verarbeitungsmodulen 1, 1' bemerkt und entsprechend reagiert. Die Reaktion kann beispielsweise darin bestehen, daß das defekte Teilsystem abgeschaltet wird. Im Regelfall geschieht dies, wie obenstehend erwähnt, durch das Übermitteln des Sperrsignals über die Steuerleitung 22. Zur Erhöhung der Sicherheit des Automatisierungssystems kann durch das Verarbeitungsmodul 1 zusätzlich der Schalter 12 geöffnet werden. Dadurch fällt das Relais 23 ab, so daß der Schalter 24 Öffnet. Dadurch wird die Stromversorgungseinrichtung 20 von den Ausgängen der Ausgabebaugruppe 17 getrennt. Es steht folglich ein zweiter, von der Abschaltung über die Steuerleitung 22 und die Schaltergruppe 21 völlig unabhängiger Abschaltweg für die Ausgänge zur Verfügung.

Durch die Verwendung der erfindungsgemäßen Verarbeitungsmodule 1, 1' ergibt sich also bei redundanten Automatisierungssystemen eine Entlastung der Zentraleinheiten 15, 15' von der Synchronisation und der Datenaufbereitung. Auch können identische Zentraleinheiten 15 wahlweise bei redundanten oder nichtredundanten Automatisierungssystemen eingesetzt werden. Darüber hinaus kann ein zweiter Abschaltweg für die Peripherie zur Verfügung gestellt werden und so die Sicherheit des Systems erhöht werden.

Abschließend sei noch erwähnt, daß das Verarbeitungsmodul 1 selbstverständlich sowohl eine separate Baugruppe sein als auch mit der Zentraleinheit 15 eine bauliche Einheit bilden kann.

## Patentansprüche

1. Verarbeitungsmodul (1) für ein modulares Automatisierungssystem, z. B. eine modulare speicherprogrammierbare Steuerung, wobei das Automatisierungssystem aus einer Zentraleinheit (15) und der Zentraleinheit (15) untergeordneten Peripherieeinheiten (16, 17) z. B. Ein-/Ausgabebaugruppen (16, 17) besteht, wobei die Peripherieeinheiten (16, 17) über einen Gerätebus (11) miteinander koppelbar sind, wobei das Verarbeitungsmodul (1) einen Prozessor (2), einen Speicher (3, 4), ein an den Gerätebus (11) ankoppelbares sperrbares Buskoppelelement (5) und ein an die Zentraleinheit (15) ankoppelbares sperrbares Zentraleinheitskoppelelement (6) aufweist, die über einen verarbeitungsmodulinternen Modulbus (10) miteinander verbunden sind, wobei das Verarbeitungsmodul (1) mindestens eine über den Modulbus (10) mit dem Prozessor (2) verbundene Kommunikationsschnittstelle aufweist, und wobei Zugriffe der Zentraleinheit (15) auf die Peripherieeinheiten (16, 17) indirekt über das Verarbeitungsmodul (1) erfolgen.

2. Verarbeitungsmodul (1) nach Anspruch 1, **dadurch gekennzeichnet,** daß das Verarbeitungsmodul (1) des Automatisierungssystems über dessen Kommunikationsschnittstelle (8) mit einer Kommunikationsschnittstelle (8') eines Verarbeitungsmodules (1') eines weiteren Automatisierungssystems kommunikativ verbindbar ist.

3. Verarbeitungsmodul (1) nach Anspruch 1 oder 2, **dadurch gekennzeichnet,** daß es eine mit dem Prozessor (2) verbundene Programmierschnittstelle (7) aufweist.

4. Verarbeitungsmodul (1) nach Anspruch 1, 2 oder 3, **dadurch gekennzeichnet,** daß es eine mit dem Prozessor (2) verbundene Alarmschnittstelle (9) aufweist.

5. Redundantes Automatisierungssystem, bestehend aus mindestens zwei modularen Automatisierungssystemen zur Steuerung einer technischen Anlage (25) bzw. eines technischen Prozesses über Prozeßsensorelemente und Prozeßstellglieder (19), bestehend aus einer Zentraleinheit (15), einem Verarbeitungsmodul (1) nach einem der obigen Ansprüche und Peripherieeinheiten (16, 17), wobei die Peripherieeinheiten (16, 17) über einen Gerätebus miteinander gekoppelt sind, wobei das Verarbeitungsmodul über sein Buskoppelelement (5) an den Gerätebus (11) und über sein Zentraleinheitkoppelelement (6) an die Zentraleinheit angekoppelt ist, wobei die Kommunikationsschnittstellen (8, (8') der Verarbeitungsmodule (1, 1') der modularen Automatisierungssysteme über ein Kommunikationssystem (26) miteinander verbunden sind.

6. Redundantes Automatisierungssystem nach Anspruch 5, **dadurch gekennzeichnet,** daß die modularen Automatisierungssysteme sich über die Verarbeitungsmodule (1, 1') synchronisieren.

7. Redundantes Automatisierungssystem nach Anspruch 5 oder 6, **dadurch gekennzeichnet,** daß die gesamte Kommunikation zwischen den modularen Automatisierungssystem, z. B. das Aufdaten eines der modularen Automatisierungssysteme durch das andere der modularen Automatisierungssysteme über die Verarbeitungsmodule (1, 1') erfolgt.

## Claims

1. Processing module (1) for a modular automation system, for example a modular memory-programmable control, whereby the automation system comprises a central unit (15) and peripheral units (16, 17) subordinate to the central unit (15), for example input/output modules (16, 17), whereby the peripheral units (16, 17) can be coupled to each other by way of a device bus (11), whereby the processing module (1) has a processor (2), a memory (3, 4), a blockable bus coupling element (5) which can be coupled to the device bus (11) and a blockable central unit coupling element (6) which can be coupled to the central unit (15), which are connected to each other by way of a module bus (10) inside the processing module, whereby the processing module (1) has at least one communication interface connected by way of the module bus (10) to the processor (2), and whereby accesses of the central unit (15) to the peripheral units (16, 17) take place indirectly by way of the processing module (1).

2. Processing module (1) according to claim 1, characterized in that the processing module (1) of the automation system can be communicatively connected by way of its communication interface (8) to a communication interface (8') of a processing module (1') of another automation system.

3. Processing module (1) according to claim 1 or 2, characterized in that it has a programming interface (7) connected to the processor (2).

4. Processing module (1) according to claim 1, 2 or 3, characterized in that it has an alarm interface (9) connected to the processor (2).

5. Redundant automation system, comprising at least two modular automation systems for controlling a technical system (25) or a technical process by way of process sensor elements and process actuators (19), comprising a central unit (15), a processing module (1) according to one of the above claims and peripheral units (16, 17), whereby the peripheral units (16, 17) are coupled to each other by way of a device bus, whereby the processing module is coupled by way of its bus coupling element (5) to the device bus (11) and by way of its central unit coupling element (6) to the central unit, whereby the communication interfaces (8, 8') of the processing modules (1, 1') of the modular automation systems are connected to each other by way of a communication system (26).

6. Redundant automation system according to claim 5, characterized in that the modular automation systems synchronize themselves by way of the processing modules (1, 1').

7. Redundant automation system according to claim 5 or 6, characterized in that all the communication between the modular automation systems, for example the updating of one of the modular automation systems by the other modular automation system takes place by way of the processing modules (1, 1').

## Revendications

1. Module (1) de traitement pour un système d'automatisation modulaire, par exemple pour une commande à programme enregistré modulaire, le système d'automatisation étant constitué d'une unité (15) centrale et d'unités (16, 17) périphériques subordonnées à l'unité (15) centrale, par exemple des groupes (16) d'entrée et des groupes (17) de sortie, les unités (16, 17) périphériques pouvant être couplées entre elles par l'intermédiaire d'un bus (11) d'unité, le module (1) de traitement comportant un processeur (2), une mémoire (3, 4), un élément (5) de couplage de bus pouvant être couplé au bus (11) d'unité et pouvant être bloqué et un élément (6) de couplage d'unité centrale pouvant être couplé à l'unité (15) centrale et pouvant être bloqué, qui sont reliés entre eux par l'intermédiaire d'un bus (10) de module interne au module de traitement, le module de traitement comportant au moins une interface de communication reliée au processeur (2) par l'intermédiaire du bus (10) de module, et des accès de l'unité (15) centrale aux unités (16, 17) périphériques s'effectuant indirectement par l'intermédiaire du module (1) de traitement.

2. Module (1) de traitement suivant la revendication 1, caractérisé en ce que le module (1) de traitement du système d'automatisation peut. du point de vue de la communication, être relié par l'intermédiaire de son interface (8) de communication à une interface (8') de communication d'un module (1') de traitement d'un système d'automatisation supplémentaire.

3. Module (1) de traitement suivant la revendication 1 ou 2. caractérisé en ce qu'il comporte une interface (7) de programmation reliée au processeur (2).

4. Module (1) de traitement suivant la revendication 1. 2 ou 3. caractérisé en ce qu'il comporte une interface (9) d'alerte reliée au processeur (2).

5. Système d'automatisation redondant, constitué d'au moins deux systèmes d'automatisation modulaire servant à commander une installation (25) technique ou un processus technique par l'intermédiaire d'éléments capteurs pour le processus et d'éléments (19) de réglage du processus et constitué d'une unité (15) centrale, d'un module (1) de traitement suivant les revendications précédentes et d'unités (16, 17) périphériques, les unités (16 17) périphériques étant couplées entre elles par l'intermédiaire d'un bus d'unité, le module de traitement étant couplé par l'intermédiaire de son élément (5) de couplage de bus au bus (11) d'unité et par l'intermédiaire de son élément (6) de couplage d'unité centrale à l'unité centrale, les interfaces (8, 8') de communication des modules (1, 1') de traitement des systèmes d'automatisation modulaires étant reliées entre elles par l'intermédiaire d'un système (26) de communication.

6. Système d'automatisation redondant suivant la revendication 5. caractérisé en ce que les systèmes d'automatisation modulaires se synchronisent par l'intermédiaire des modules (1, 1') de traitement.

7. Système d'automatisation redondant suivant la revendication 5 ou 6, caractérisé en ce que toute la communication entre les systèmes d'automatisation modulaires, par exemple la mise à jour de l'un des systèmes d'automatisation modulaires par l'autre système d'automatisation modulaire. s'effectue par l'intermédiaire des modules (1,1') de traitement.
